# FASCICULE DE BREVET EUROPEEN

(11) **EP 2 392 741 B1**
(45) Date de publication et mention de la délivrance du brevet: **07.08.2013**
(21) Numéro de dépôt: 10164548.9
(22) Date de dépôt: 01.06.2010
(51) Int. Cl.: E04B 1/80, E04C 2/288, E04B 2/02

(54) **Plaque de parement isolante et son procédé de fabrication**
Isolierverkleidungsplatte und ihr Herstellungsverfahren
Insulating facing plate and manufacturing method thereof

(43) Date de publication de la demande: 07.12.2011
(73) Titulaire: GE & CO. S.A., 4770 Amel (BE)
(72) Inventeur: Genten, Ernst, 4770 Amel (BE)
(74) Mandataire: Pronovem

(56) Documents cités:
- EP-A2- 0 086 545
- DE-A1- 1 807 883
- DE-A1- 10 139 261
- DE-A1- 10 214 229
- DE-U1- 8 201 949

## Description

### Objet de l'invention

La présente invention se rapporte à une plaque de parement isolante et à son procédé de fabrication. Elle se rapporte plus particulièrement à une plaque de parement isolante comportant sur sa surface extérieure une couche de pierres naturelles. Ces pierres ont un contour irrégulier et une épaisseur non homogène.

### Etat de la technique

Les plaques de parement composites de l'état de la technique comportant une partie isolante et une partie décorative, généralement des lamelles de briques décoratives associées à des mousses de polyuréthanne, existent depuis des années. Ces plaques sont aussi bien utilisées dans la construction d'immeubles neufs que dans la rénovation de bâtiments anciens.

Le document BE 891963 (Genten 1982) divulgue une telle plaque de parement avec son procédé de fabrication.

Le document DE-U-8201949 divulgue une plaque de parement selon le préambule de la revendication 1 de la présente invention.

Les plaques de parement composites comportant des pierres naturelles brutes, c'est-à-dire non sciées selon des schémas géométriques, n'ont cependant jamais pu être réalisées. Les particularités des pierres naturelles sont leur contour, leur surface et leur épaisseur irréguliers. Ces caractéristiques tant recherchées par les amateurs de ces pierres rendent la fabrication d'une plaque de parement isolante prête à l'emploi sur base de ce type de pierres particulièrement difficile.

Parmi les difficultés rencontrées, citons de manière non exhaustive les fissures et cassures des pierres naturelles engendrées par la pression exercée par l'expansion de la mousse de polyuréthanne pendant le procédé de fabrication. Ce phénomène est d'autant plus accentué que les pierres irrégulières ne peuvent pas reposer complètement sur toute leur surface dans les moules et la pression inégale fait souvent basculer ou glisser certaines pierres, ce qui entraîne une pénétration de la mousse de polyuréthanne dans les fentes jusqu'à la surface extérieure de la plaque de parement ou dans des joints élargis. Ces joints irréguliers influencent la profondeur de pénétration du mélange réactionnel polyol et isocyanate encore liquide et rendent une pénétration maîtrisée de cette mousse isolante difficilement gérable. On peut alors se retrouver sans joints de sable stabilisé avec des débordements de mousse de polyuréthanne de toutes parts. Il fallait donc développer un système de pose de ces pierres naturelles permettant de contourner ces difficultés.

### Buts de l'invention

La présente invention propose une plaque de parement isolante destinée à être fixée sur un support comportant sur sa face extérieure décorative des pierres naturelles avec une surface et un contour irréguliers ainsi qu'un procédé de fabrication pour une telle plaque de parement isolante.

### Résumé de l'invention

La présente invention divulgue une plaque de parement isolante destinée à être fixée sur un support, ladite plaque comportant sur sa face extérieure des pierres naturelles avec une surface et un contour irréguliers et sur sa face intérieure une mousse isolante, lesdites pierres naturelles étant séparées par des joints remplis partiellement par du sable, lesdits joints comportant des douilles pour accueillir, en utilisation, un système de fixation mécanique permettant à ladite plaque d'être fixée sur ledit support.

Les modes d'exécution préférés de l'invention comportent au moins une ou une combinaison quelconque appropriée des caractéristiques suivantes :
- le système de fixation mécanique comporte une vis collaborant, en utilisation, avec une buselure sertie dans le joint de la plaque à l'endroit des douilles, ladite vis comportant une tête en matière synthétique et un corps métallique ainsi qu'une limitation du moment de force de rotation par augmentation progressive de l'effort de friction entre la tête de vis et ladite buselure;
- la pierre naturelle est sélectionnée parmi le grès, le schiste, le grès schisteux, le calcaire gréseux, le calcaire de Meuse, le silex, le quartzite, l'Arkose et le granit ;
- la pierre naturelle est non gélive et possède une absorption d'eau d'au moins 6 % en poids mesurée par immersion dans l'eau durant 24 heures à 20 °C ;
- la mousse isolante est une mousse synthétique sélectionnée parmi le groupe des mousses de polyuréthanne, de polyisocyanurate et de polyphénols ;
- la mousse isolante comporte un profil d'emboitement afin d'éviter une pénétration d'eau entre deux plaques consécutives ;
- la plaque de parement de 0,5 m² pèse moins de 20 kg ;
- la plaque de parement a une épaisseur inférieure à 50 mm, de préférence inférieure à 40 mm ;
- la plaque comporte au moins six douilles pour accueillir le système de fixation.

L'invention divulgue également un procédé de fabrication d'une plaque de parement isolante selon l'invention comportant les étapes suivantes :
- mise à disposition d'un moule de forme appropriée ;
- disposition des douilles destinées à maintenir une ouverture au niveau des joints pour le système de fixation ;
- dépôt d'un lit de sable dans le fond du moule;
- échauffement des pierres naturelles;
- arrangement des pierres sur le lit de sable dans le moule;
- application d'un vibrateur sur les pierres pour favoriser leur pénétration dans le lit de sable ;
- coulée du mélange réactionnel isocyanate et polyol sur la couche de pierres pour former la mousse isolante;
- maintien du moule fermé sous pression durant le temps de réaction de l'isocyanate et du polyol;
- décoffrage de la plaque de parement isolante.

Les modes d'exécution préférés du procédé de l'invention comportent au moins une ou une combinaison quelconque appropriée des étapes suivantes :
- application d'un produit décoffrant après la mise à disposition du moule ;
- uniformisation de la répartition du sable dans les joints après l'application du vibrateur ;
- échauffement des pierres naturelles jusqu'à 40 °C.

L'invention divulgue également une construction comportant des plaques de parement selon l'invention.

### Brève description des figures

La figure 1 représente la plaque de parement préfabriquée selon l'invention avec une disposition étudiée des pierres naturelles à contour irrégulier.

Les figures 2 à 12 représentent les étapes du procédé de fabrication de la plaque de parement selon l'invention.

La figure 13 représente la disposition de la plaque de parement selon l'invention avec son profil périphérique orienté de manière à garantir une étanchéité et un rejet d'eau vers l'extérieur.

La figure 14 représente le système de fixation de la plaque de parement isolante selon l'invention.

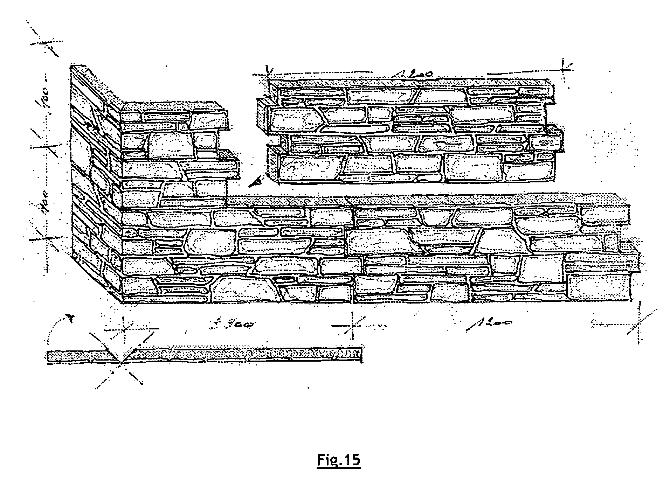

La figure 15 représente une association de plaques de parement isolantes selon l'invention avec un montage en coin.

### Liste des symboles de référence

1. Plaque de parement selon l'invention
2. Moule
3. Douilles
4. Table de vibration
5. Pierres naturelles
6. Mélange isocyanate/polyol
7. Couvercle du moule
8. Isolant intégré au panneau
9. Isolant supplémentaire à placer entre le support et la plaque de parement
10. Vis de fixation au support
11. Buselure

### Description détaillée de l'invention

La présente invention ne vise pas les plaques isolantes composites comportant sur leur surface extérieure des pierres découpées en plaques (marbres ou pierres bleues) qui ont toujours des contours réguliers et des épaisseurs homogènes et qui ne présentent pas du tout les mêmes difficultés d'assemblage que des pierres brutes à contour irrégulier et avec des épaisseurs aléatoires variant d'une pierre à l'autre et même au sein d'une même pierre. Par ailleurs, ces plaques ont souvent une porosité insuffisante quand elles sont polies.

Les plaques de parement selon l'invention unissent d'une manière adéquate l'isolation en mousse de polyuréthanne, de polyisocyanurate ou de polyphénols expansés et des éléments décoratifs en pierre naturelle. Ces plaques sont adaptées aussi bien à des applications en façade où elles sont exposées aux intempéries qu'à des murs décoratifs intérieurs.

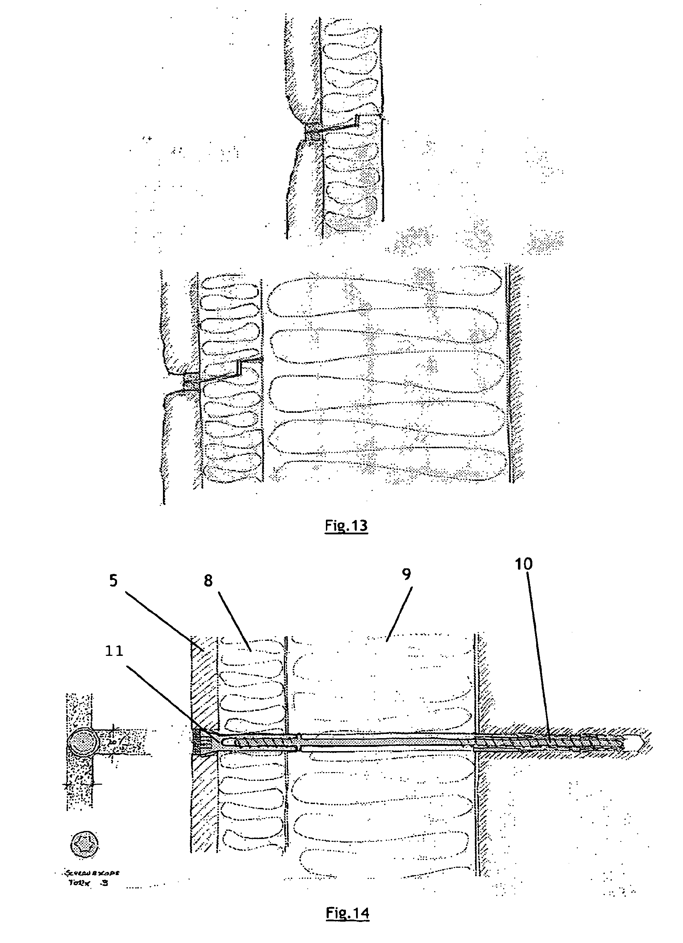

Les caractéristiques et avantages principaux des plaques de parement selon l'invention sont les suivants :
- décoration et isolation réunies dans un élément de façade unique permettant l'isolation d'un bâtiment par l'extérieur, donc sans ponts thermiques ;
- poids réduit et donc facilité d'utilisation et montage rapide (Panneau de 0,5m² : <20kg) ;
- épaisseur totale réduite à moins de 50 mm, de préférence à moins de 40 mm. Le caractère isolant peut cependant être amélioré en disposant une isolation supplémentaire (jusqu' à 120 mm) entre le panneau et le mur support ;
- fixation mécanique à coupure thermique moyennant vis avec tête en matière synthétique,
- jonction entre plaques selon l'invention sans collage ou apport de pièces supplémentaires ;
- joint du système préfabriqué en usine ;
- protection de haut niveau contre les influences climatiques tout en apportant un avantage acoustique et thermique important ;
- étanchéité entre éléments obtenue par la formation d'un profil adéquat au contour de chaque élément du système (voir figure 13) et/ou par l'application d'un produit d'étanchéité;
- comportement au feu : B1 selon DIN 4102 (difficilement inflammable) ;
- système perméable à la vapeur d'eau (le mur continue donc à respirer) ;
- conditionnement suivant l'immeuble ou la surface à couvrir autorisant une pose par le client lui-même.

Parmi les matières premières pour la réalisation des plaques de parement selon l'invention, on utilise des pierres naturelles de format et d'épaisseur variable (entre environ 15 et environ 30 mm). Parmi les pierres naturelles utilisables dans le cadre de la présente invention, on peut citer, sans prétendre être limitatif, les différentes formes de grès et notamment le grès schisteux, le grès, le schiste, le calcaire gréseux, le calcaire de Meuse, le silex, le quartzite, l'Arkose et le granit. Toutes les pierres naturelles peuvent convenir à condition qu'elles résistent au gel et soient libres de tout sel exsudant et de toute inclusion provoquant des efflorescences ou des éclats en surface.

Par ailleurs, pour assurer une bonne adhérence entre la mousse synthétique et la pierre, celle-ci doit avoir une porosité minimum. Ceci est le cas de la plupart des pierres naturelles. Cette porosité est indirectement déterminée par la capacité d'absorption d'eau de la pierre. Celle-ci est mesurée par immersion dans l'eau durant 24 heures à 20 °C. L'absorption d'eau doit être de préférence supérieure à 6 % en poids.

Le sable utilisé est généralement un sable de fleuve séché, d'une granulométrie adaptée à la couleur et à l'agencement des pierres.

La mousse isolante est généralement une mousse de polyuréthanne, une mousse de polyisocyanurate ou une mousse de polyphénols d'une densité d'environ 40 +/- 5 Kg/m³.

La plaque de parement selon l'invention comporte un contour profilé pour garantir son étanchéité. Les profils sont représentés à la figure 13. Avec et sans couche d'isolant supplémentaire, l'étanchéité est garantie.

La plaque de parement 1 selon l'invention comporte également une fixation mécanique 10 qui augmente la résistance à la rupture des joints et permet d'atteindre toujours l'effort de traction optimum. La fixation mécanique est étanche à l'eau et bénéficie d'une isolation thermique de la tête en matière synthétique (ABS) et du corps métallique de la vis 10 ainsi que d'une limitation du moment de force de rotation par augmentation progressive de l'effort de friction entre la tête de vis 10 et la buselure 11 sertie dans le joint de la plaque 1.

Le procédé de fabrication de la plaque de parement selon l'invention est discontinu et se fait dans des moules démontables ayant une forme adaptée au modèle de plaque envisagé.

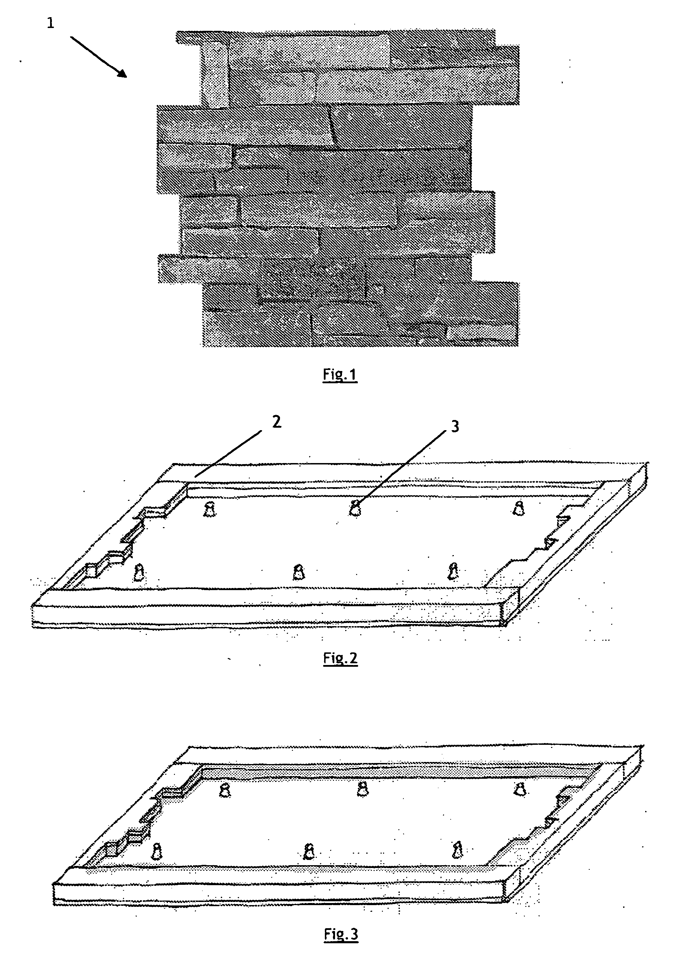

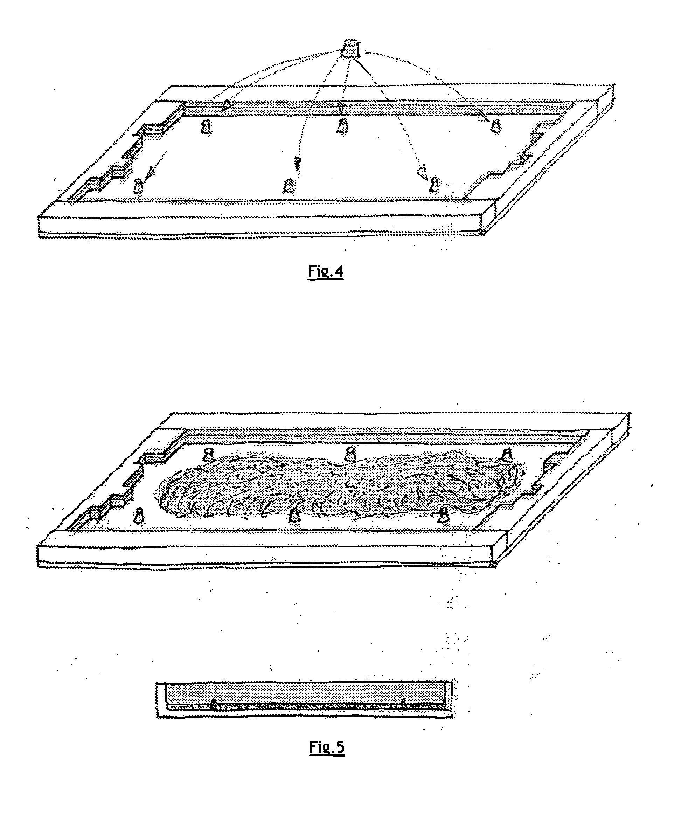

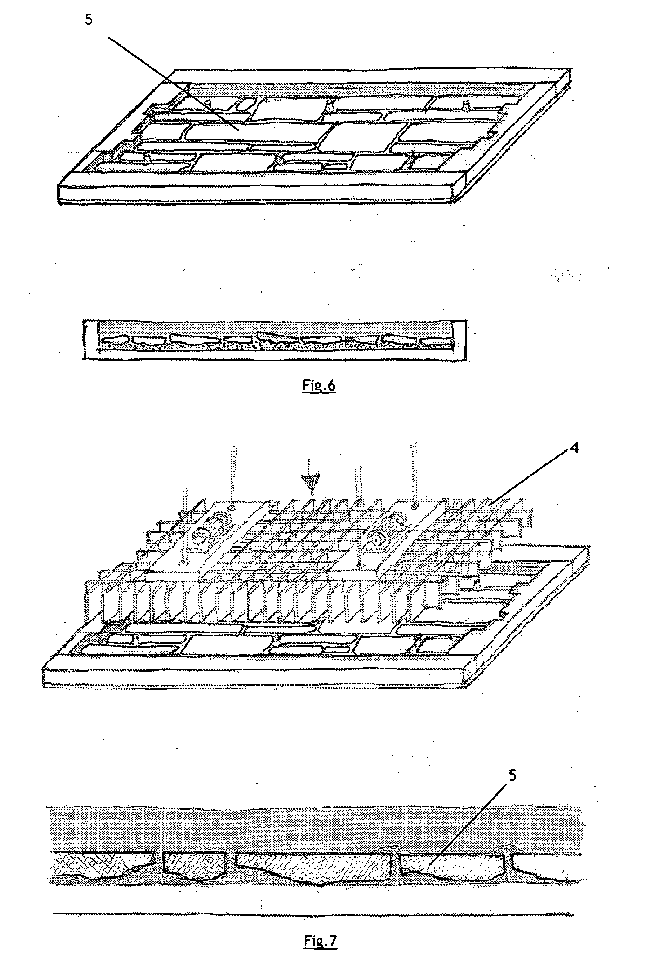

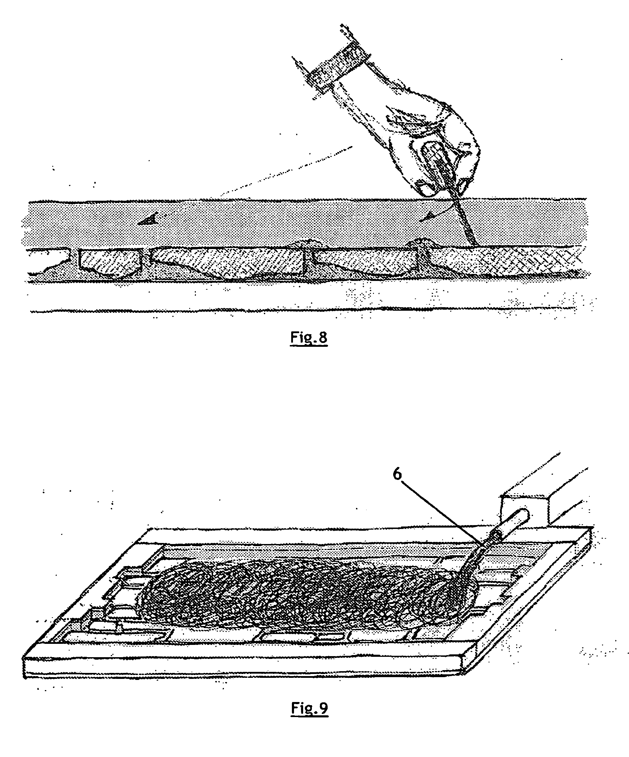

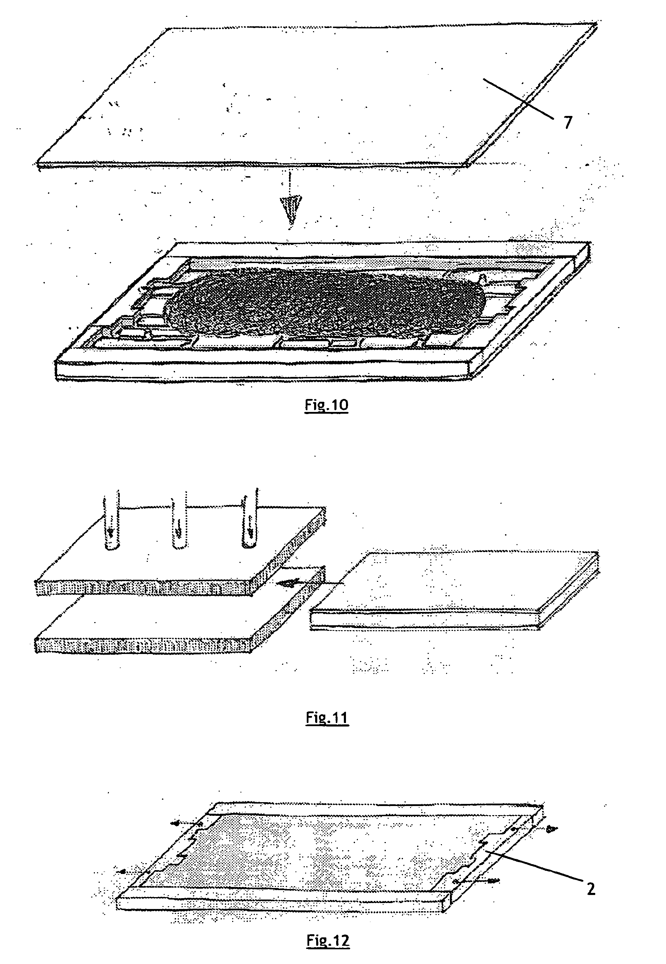

Un exemple de procédé de fabrication comportant un ensemble d'étapes distinctes est illustré dans les figures 2 à 12 :
- mise à disposition d'un moule 2 de forme adaptée et application d'un produit décoffrant (Fig.2 et 3);
- disposition des douilles 3 destinées à recevoir les vis de fixation 10 des panneaux (Fig.4) ;
- dépôt d'un lit de sable dans le fond du moule 2 (Fig.5) ;
- échauffement des pierres 5 jusqu'à une température d'environ 40 °C ;
- dépôt des pierres 5 dans le moule 2 sur le lit de sable (Fig.6) ;
- application d'un vibrateur 4 sur les pierres 5 pour favoriser leur pénétration dans le lit de sable (Fig.7) ;
- uniformisation de la répartition du sable dans les joints (Fig.8) ;
- coulée du mélange isocyanate et polyol 6 sur la couche de pierres 5 et maintien du moule 2 fermé sous pression à l'aide du couvercle 7 (Fig.10 et 11) ;
- décoffrage (Fig.12).

## Revendications

1. Plaque de parement isolante (1) destinée à être fixée sur un support, ladite plaque (1) comportant sur sa face extérieure des pierres naturelles (5) avec une surface et un contour irréguliers et sur sa face intérieure une mousse isolante (8), lesdites pierres naturelles (5) étant séparées par des joints remplis partiellement par du sable, **caractérisée en ce que** lesdits joints comportent des douilles (3) pour accueillir, en utilisation, un système de fixation mécanique permettant à ladite plaque d'être fixée sur ledit support.

2. Plaque de parement isolante (1) selon la revendication 1, **caractérisée en ce que** le système de fixation mécanique comporte une vis (10) coopérant , en utilisation, avec une buselure (11) sertie dans le joint de la plaque (1) à l'endroit des douilles (3), ladite vis (10) comportant une tête en matière synthétique et un corps métallique ainsi qu'une limitation du moment de force de rotation par augmentation progressive de l'effort de friction entre la tête de vis (10) et ladite buselure (11).

3. Plaque de parement isolante (1) selon l'une quelconque des revendications 1 ou 2, **caractérisée en ce que** ladite pierre naturelle est sélectionnée parmi le grès schisteux, le grès, le schiste, le calcaire gréseux, le calcaire de Meuse, le silex, le quartzite, l'Arkose et le granit.

4. Plaque de parement isolante (1) selon l'une quelconque des revendications précédentes, **caractérisée en ce que** ladite pierre naturelle est non gélive et possède une absorption d'eau d'au moins 6 % en poids mesurée par immersion dans l'eau durant 24 heures à 20 °C.

5. Plaque de parement isolante (1) selon l'une quelconque des revendications précédentes, **caractérisée en ce que** ladite mousse isolante (8) est une mousse synthétique sélectionnée parmi le groupe des mousses de polyuréthanne, de polyisocyanurate et de polyphénols.

6. Plaque de parement isolante (1) selon l'une quelconque des revendications précédentes, **caractérisée en ce que** ladite mousse isolante (8) comporte un profil d'emboitement afin d'éviter une pénétration d'eau entre deux plaques consécutives.

7. Plaque de parement isolante (1) selon l'une quelconque des revendications précédentes, **caractérisée en ce qu'**une plaque (1) de 0,5 m² pèse moins de 20 kg.

8. Plaque de parement isolante (1) selon l'une quelconque des revendications précédentes, **caractérisée en ce qu'**une plaque (1) a une épaisseur inférieure à 50 mm, de préférence inférieure à 40 mm.

9. Plaque de parement isolante (1) selon l'une quelconque des revendications précédentes, **caractérisée en ce qu'**une plaque (1) comporte au moins six douilles (3) pour accueillir le système de fixation (10).

10. Procédé de fabrication d'une plaque de parement isolante (1) selon l'une quelconque des revendications précédentes comportant les étapes suivantes :
- mise à disposition d'un moule (2) de forme appropriée ;
- disposition des douilles (3) destinées à maintenir une ouverture au niveau des joints pour le système de fixation ;
- dépôt d'un lit de sable dans le fond du moule (2) ;
- échauffement des pierres naturelles (5);
- arrangement des pierres (5) sur le lit de sable dans le moule (2);
- application d'un vibrateur (4) sur les pierres (5) pour favoriser leur pénétration dans le lit de sable ;
- coulée du mélange réactionnel isocyanate et polyol sur la couche de pierres (5) pour former la mousse isolante (8);
- maintien du moule (2) fermé sous pression durant le temps de réaction de l'isocyanate et du polyol;
- décoffrage de la plaque de parement isolante (1).

11. Procédé de fabrication d'une plaque de parement isolante (1) selon la revendication 10 comportant une étape d'application d'un produit décoffrant après la mise à disposition du moule.

12. Procédé de fabrication d'une plaque de parement isolante (1) selon l'une des revendications 10 ou 11 comportant une étape d'uniformisation de la répartition du sable dans les joints après l'application du vibrateur (4).

13. Procédé de fabrication d'une plaque de parement isolante (1) selon l'une quelconque des revendications 10 à 12, **caractérisée en ce que** les pierres naturelles sont échauffées jusqu'à au moins 40 °C.

14. Construction comportant des plaques de parement selon l'une quelconque des revendications 1 à 9.

## Patentansprüche

1. Isolierende Verblendungsplatte (1), die dazu bestimmt ist, auf einer Unterlage befestigt zu sein, wobei die Platte (1) auf ihrer Außenseite Natursteine (5) mit einer unregelmäßigen Oberfläche und Kontur und auf ihrer Innenseite einen Isolationsschaum (8) aufweist, wobei die Natursteine (5) durch Fugen getrennt sind, die teilweise mit Sand gefüllt sind, **dadurch gekennzeichnet, dass** die Fugen Hülsen (3) aufweisen, um im Gebrauch ein mechanisches Befestigungssystem aufzunehmen, das es der Platte erlaubt, auf der Unterlage befestigt zu sein.

2. Isolierende Verblendungsplatte (1) nach Anspruch 1, **dadurch gekennzeichnet, dass** das mechanische Befestigungssystem eine Schraube (10) aufweist, die im Gebrauch mit einem in der Fuge der Platte (1) an der Stelle der Hülsen (3) gefassten Überzug (11) zusammenarbeitet, wobei die Schraube (10) einen Kopf aus synthetischem Material und einen Metallkörper aufweist sowie eine Begrenzung des Rotationskraftmoments durch schrittweise Erhöhung der Reibungskraft zwischen dem Kopf der Schraube (10) und dem Überzug (11).

3. Isolierende Verblendungsplatte (1) nach einem der Ansprüche 1 oder 2, **dadurch gekennzeichnet, dass** der Naturstein aus den Sandschiefern, dem Sandstein, dem Schiefer, dem Sandkalkstein, dem Meuse-Kalkstein, dem Feuerstein, dem Quarzit, der Arkose und dem Granit ausgewählt ist.

4. Isolierende Verblendungsplatte (1) nach einem der vorangehenden Ansprüche, **dadurch gekennzeichnet, dass** der Naturstein nicht frostempfindlich ist und eine Wasserabsorption von mindestens 6 Gew.-%, gemessen durch Eintauchen in Wasser während 24 Stunden bei 20 °C, besitzt.

5. Isolierende Verblendungsplatte (1) nach einem der vorangehenden Ansprüche, **dadurch gekennzeichnet, dass** der Isolationsschaum (8) ein synthetischer Schaum ist, der aus der Gruppe der Polyurethan-, Polyisocyanurat- und Polyphenolschäume ausgewählt ist.

6. Isolierende Verblendungsplatte (1) nach einem der vorangehenden Ansprüche, **dadurch gekennzeichnet, dass** der Isolationsschaum (8) ein Rastprofil aufweist, um ein Eindringen von Wasser zwischen zwei aufeinanderfolgenden Platten zu verhindern.

7. Isolierende Verblendungsplatte (1) nach einem der vorangehenden Ansprüche, **dadurch gekennzeichnet, dass** eine Platte (1) von 0,5 m² weniger als 20 kg wiegt.

8. Isolierende Verblendungsplatte (1) nach einem der vorangehenden Ansprüche, **dadurch gekennzeichnet, dass** eine Platte (1) eine Dicke von weniger als 50 mm, vorzugsweise von weniger als 40 mm, hat.

9. Isolierende Verblendungsplatte (1) nach einem der vorangehenden Ansprüche, **dadurch gekennzeichnet, dass** eine Platte (1) mindestens sechs Hülsen (3) hat, um das Befestigungssystem (10) aufzunehmen.

10. Herstellungsverfahren einer isolierenden Verblendungsplatte (1) nach einem der vorangehenden Ansprüche, das die folgenden Schritte aufweist:
- Bereitstellen einer Form (2) mit einer geeigneten Form,
- Anordnen der Hülsen (3), die dazu bestimmt sind, eine Öffnung auf Ebene der Fugen für das Befestigungssystem aufrecht zu erhalten,
- Aufbringen eines Sandbetts auf den Boden der Form (2),
- Erwärmen der Natursteine (5),
- Anordnen der Steine (5) auf dem Sandbett in der Form (2),
- Anwenden eines Vibrators (4) auf den Steinen (5), um ihr Eindringen in das Sandbett zu fördern,
- Gießen des Isocyanat- und Polyol-Reaktionsgemischs auf die Steinschicht (5), um den Isolationsschaum (8) zu bilden,
- Geschlossenhalten der Form (2) unter Druck während der Reaktionszeit des Isocyanats und des Polyols,
- Lösen der isolierenden Verblendungsplatte (1) aus der Form.

11. Herstellungsverfahren einer isolierenden Verblendungsplatte (1) nach Anspruch 10, das nach der Bereitstellung der Form einen Schritt der Anwendung eines aus der Form lösenden Produkts aufweist.

12. Herstellungsverfahren einer isolierenden Verblendungsplatte (1) nach einem der Ansprüche 10 oder 11, das nach Anwendung des Vibrators (4) einen Schritt der Vereinheitlichung der Verteilung des Sands in den Fugen aufweist.

13. Herstellungsverfahren einer isolierenden Verblendungsplatte (1) nach einem der Ansprüche 10 bis 12, **dadurch gekennzeichnet, dass** die Natursteine auf mindestens 40 °C erwärmt werden.

14. Konstruktion, die Verblendungsplatten nach einem der Ansprüche 1 bis 9 aufweist.

## Claims

1. An insulating facing panel (1) intended to be attached on a support, said panel (1) comprising natural stones (5) with an irregular surface and contour on its outer face and insulating foam (8) on its inner face, said natural stones (5) being separated by joints that are partly filled with sand, **characterized in that** said joints comprise bushings (3) for receiving in use a mechanical attachment system allowing said panel to be attached on said support.

2. The insulating facing panel (1) according to Claim 1, **characterized in that** the mechanical attachment system comprises a screw (10) co-operating, in use, with a nozzle (11) crimped in the joint of the panel (1) at the location of the bushings (3), said screw (10) comprising a head in synthetic material and a metal body as well as a limitation of the rotational force moment by gradual increase in the frictional force between the screw head (10) and said nozzle (11).

3. The insulating facing panel (1) according to any of Claims 1 or 2, **characterized in that** said natural stone is selected from shale sandstone, sandstone, shale, shale limestone, Meuse limestone, flint, quartzite, arkose and granite.

4. The insulating facing panel (1) according to any of the preceding claims, **characterized in that** said natural stone is frost-resistant and features water absorption of at least 6% by weight measured by immersion in water for 24 hours at 20°C.

5. The insulating facing panel (1) according to any of the preceding claims, **characterized in that** said insulating foam (8) is synthetic foam selected from the group of polyurethane, polyisocyanurate and polyphenol foams.

6. The insulating facing panel (1) according to any of the preceding claims, **characterized in that** said insulating foam (8) comprises a tongue-and-groove profile, in order to avoid water penetration between two consecutive panels.

7. The insulating facing panel (1) according to any of the preceding claims, **characterized in that** a panel (1) of 0.5 m² weighs less than 20 kg.

8. The insulating facing panel (1) according to any of the preceding claims, **characterized in that** a panel (1) has a thickness of less than 50 mm, preferably less than 40 mm.

9. The insulating facing panel (1) according to any of the preceding claims, **characterized in that** a panel (1) comprises at least six bushings (3) for receiving the attachment system (10).

10. A method for manufacturing an insulating facing panel (1) according to any of the preceding claims, comprising the following steps:
- providing a mold (2) of suitable shape;
- positioning the bushings (3) intended to maintain an aperture at the level of the joints for the attachment system;
- depositing a sand bed at the bottom of the mold (2);
- heating up the natural stones (5);
- arranging the stones (5) on the sand bed in the mold (2);
- applying a vibrator (4) on the stones (5) for promoting their penetration into the sand bed;
- casting the isocyanate and polyol reaction mixture over the layer of stones (5) to form the insulating foam (8);
- maintaining the closed mold (2) under pressure during the reaction time of the isocyanate and of the polyol;
- removing the insulating facing panel (1) from the mold.

11. The method for manufacturing an insulating facing panel (1) according to Claim 10, comprising a step for applying a mold-release product after providing the mold.

12. The method for manufacturing an insulating facing panel (1) according to one of Claims 10 or 11, comprising a step for leveling the distribution of sand in the joints after applying the vibrator (4).

13. The method for manufacturing an insulating facing panel (1) according to any of Claims 10 to 12, **characterized in that** the natural stones are heated up to at least 40°C.

14. A building comprising facing panels according to any of Claims 1 to 9.
